# EUROPÄISCHE PATENTSCHRIFT

(11) **EP 0 479 761 B1**
(45) Veröffentlichungstag und Bekanntmachung des Hinweises auf die Patenterteilung: **26.10.1994**
(21) Anmeldenummer: 91890216.4
(22) Anmeldetag: 19.09.1991
(51) Int. Cl.: B60C 11/11, B60C 11/00

(54) **Fahrzeugluftreifen**
Pneumatic tyres for vehicles
Bandage pneumatique pour véhicules

(30) Priorität: 04.10.1990 AT 2002/90
(43) Veröffentlichungstag der Anmeldung: 08.04.1992
(73) Patentinhaber: Semperit Reifen Aktiengesellschaft, A-2514 Traiskirchen (AT)
(72) Erfinder: Stumpf, Horst, Dipl.-Ing., A-2551 Enzesfeld (AT)
(74) Vertreter: Vinazzer, Edith

(56) Entgegenhaltungen:
- EP-A- 0 296 605
- DE-A- 3 425 410
- GB-A- 2 222 807
- US-A- 1 956 011
- PATENT ABSTRACTS OF JAPAN vol. 10, no. 315 (M-529)(2371) 25. Oktober 1986 & JP-A-61 125 902

## Beschreibung

Die Erfindung betrifft einen Fahrzeugluftreifen in Radialbauart mit einem drehrichtungsgebundenen Lufflächenprofil, welches durch Quernuten und durch insbesondere gerade verlaufende Umfangsnuten voneinander getrennte Profilelemente aufweist, wobei durch die Quernuten und die Profilelemente in Umfangsrichtung gleichartige Profilabschnitte gebildet sind, die in zumindest drei unterschiedlichen, einem Laufflächenrand zuzuordnenden Basispitchlängen (Umfangslängen) vorgesehen sind, wobei an einer in Umfangsrichtung verlaufenden Bezugslinie des Laufflächenprofiles Bezugspitchlängen vorgesehen sind, die größer oder kleiner sind als ihre jeweils zugehörigen Basispitchlängen, wobei die Pitchlängenänderung stetig erfolgt.

Die Optimierung eines Reifenprofiles hinsichtlich der Geräuschentwicklung durch den Kontakt des Reifens mit der Fahrbahn steht oft in Konflikt mit einem guten Naßgriff, gutem Aquaplaningverhalten und gutem Abriebswiderstand. Es sind schon seit längerem Methoden bekannt, die das Profilgeräusch reduzieren. So ist es insbesondere üblich, die Methode der "Pitchlängenvariation" anzuwenden, wonach über den Reifenumfang aufeinanderfolgende, gleichartige Profilabschnitte mit unterschiedlichen Umfangslängen, auch Pitchlängen genannt, versehen werden. Werden diese unterschiedlichen Pitchlängen nach bestimmten Kriterien aneinandergereiht, so können insbesondere die auftretenden Frequenzen auf ein breiteres Frequenzband verteilt werden. Es entsteht somit ein Frequenzspektrum, in dem die Amplituden der einzelnen Frequenzen geringer sind als die der ursprünglichen Grundfrequenz. Das Abrollgeräusch wird dadurch diffuser, weniger tonhaltig und subjektiv leiser. Zu diesem Thema existiert auch eine größere Anzahl von Patentliteratur, wobei ein Fahrzeugreifen nach dem Oberbegriff des Anspruches 1 aus der US-A 1956011 bekannt ist. Weitere Fahrzeugreifen, deren Profile nach der Methode der Pitchlängenvariation gestaltet sind, sind ferner in der US-PS 4,327,792, der US-PS 4,598,748 und der EP-A 0 246 997 beschrieben. In der Praxis unterliegt die Wahl der Pitchlängen bzw. der Pitchlängenvariationen bestimmten Einschränkungen, da Pitches nicht in beliebiger Länge bzw. Kürze gewählt werden können, um andere Reifeneigenschaften, wie Fahrverhalten und Aquaplaningverhalten nicht zu verschlechtern. In letzter Zeit haben sich drehrichtungsgebundene Laufflächenprofile, insbesondere für Reifen, die für hohe Laufgeschwindigkeiten vorgesehen sind, als vorteilhaft erwiesen, da sie herkömmlichen Profilgestaltungen hinsichtlich Naßgriff, Aquaplaningverhalten und Fahrverhalten überlegen gestaltet werden können. Es ist ferner auch bekannt, daß am Laufflächenprofil zur Geräuschminimierung gesetzte Maßnahmen, die sich etwa günstig auf das Vorbeifahrgeräusch, welches objektiv meßbar ist, auswirken, nicht unbedingt eine Verbesserung des Fahrzeug-Innengeräusches, welches nach subjektiven Kriterien zu ermitteln ist, zur Folge haben. Dabei spielt insbesondere eine Rolle, daß im Fahrzeuginneren vor allem jene Geräusche hörbar sind, die durch Körperschallübertragung entstehen.

Hier setzt nun die Erfindung ein, deren Aufgabe darin besteht, einen Reifen der eingangs genannten Art hinsichtlich des Profilgeräusches zu verbessern, wobei die zu setzenden Maßnahmen sowohl eine günstige Auswirkung auf das Vorbeifahrgeräusch als auch auf das Fahrzeug-Innengeräusch zeigen sollen.

Gelöst wird die gestellte Aufgabe erfindungsgemäß dadurch, daß die der kürzesten Basispitchlänge zugeordnete Bezugspitchlänge um höchstens 30% kürzer und um höchstens 50% länger ist als die kürzeste Basispitchlänge und daß die der längsten Basispitchlänge zugeordnete Bezugspitchlänge um höchstens 50% kleiner und um höchstens 30% länger ist als die längste Basispitchlänge.

Die gemäß der Erfindung erzielbare günstige Beeinflussung des Reifengeräusches, insbesondere des Fahrzeug-Innengeräusches, ist vor allem darauf zurückzuführen, daß eine weitere Verungleichmäßigung in der Struktur des Laufflächenprofiles erfolgt, die sich jedoch vorteilhafterweise auf das optische Erscheinungsbild des Laufflächenprofiles kaum auswirkt. Darüberhinaus wird eine optimale Abstimmung auf die erforderliche Profilstabilität und einen gleichmäßigen Abrieb erzielt.

Besonders vorteilhafte Ausgestaltungen der Erfindung sind in den Unteransprüchen enthalten.

Weitere Merkmale, Vorteile und Einzelheiten der Erfindung werden nun anhand der Zeichnung, die mehrere Ausführungsbeispiele darstellt, näher beschrieben. Dabei zeigen die Fig. 1 und Fig la ein erstes Ausführungsbeispiel, Fig. 1 eine Teilabwicklung eines Laufflächenprofiles und Fig. la eine zugehörige schematische Darstellung, Fig. 2 und Fig. 3 zeigen weitere Ausführungsbeispiele und zwar ebenfalls Teilabwicklungen von nach der Erfindung gestalteten Laufflächenprofilen.

Die grundsätzlichen Elemente, aus denen sich ein Laufflächenprofil nach der Erfindung zusammensetzt, sind Quernuten 2 und insbesondere gerade in Umfangsrichtung verlaufende Umfangsnuten 3, welche Nuten eine Gliederung in Profilelemente 1 bewirken.

In sämtlichen Ausführungsbeispielen wird hiebei das Laufflächenprofil jeweils über die Breite B, welche die Breite in der Bodenaufstandsfläche unter Normaldruck und Normallast bezeichnet, betrachtet.

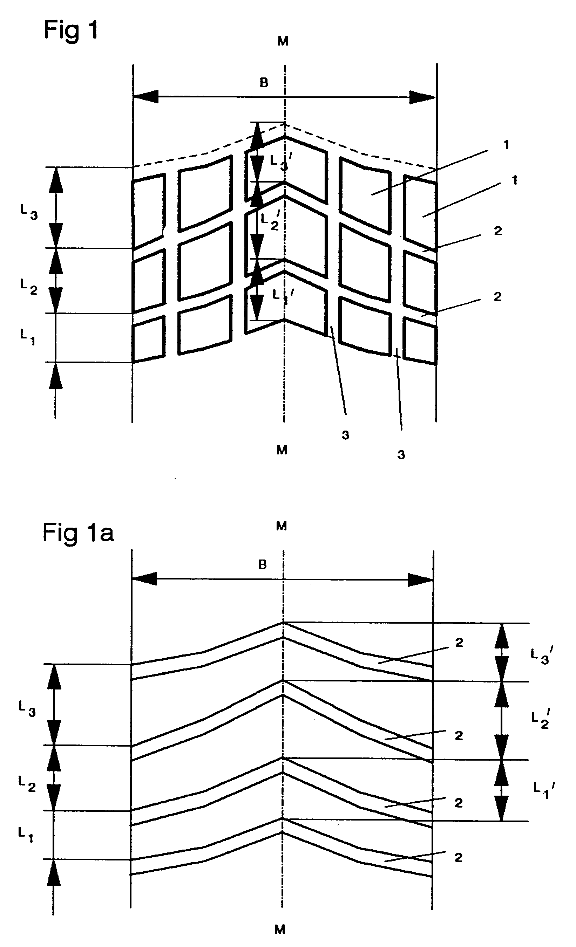

Wie aus Fig. 1 und Fig. 1a ersichtlich ist, ist das Laufflächenprofil drehrichtungsabhängig gestaltet, indem die Quernuten 2 über die Breite B betrachtet einen gepfeilten Gesamtverlauf aufweisen. Das Laufflächenprofil gemäß Fig. 1 ist bezüglich der Mittelumfangslinie M-M symmetrisch gestaltet, die dieser Mittellinie M-M zugeordneten Pfeilspitzenbereiche der Quernuten 2 treten beim Abrollen des Reifens zuerst in die Kontaktfläche zum Untergrund ein. Die Pfeilung der Quernuten 2 nimmt vom Laufflächenmittelbereich in den Laufflächenrändern zu ab.

Wie insbesondere aus Fig. 1 in Verbindung mit Fig. 1a ersichtlich ist, sind an den beiden Laufflächenrändern den Profilelementen 1 unter Einbeziehung von jeweils einer Quernut 2 unterschiedliche Umfangslängen, die üblicherweise Pitchlängen genannt werden, zugeordnet. Im vorliegenden Ausführungsbeispiel sind drei unterschiedliche Pitchlängen L₁, L₂ und L₃, wobei L₁ <L₂ <L₃ vorgesehen, deren Anordnung bzw. Aufeinanderfolge über dem Reifenumfang nach einer der bekannten Methoden ermittelt werden kann. An den beiden Lauffächenrändern stimmen die Pitchlängen jeweils überein.

Ausgehend von einem Laufflächenrand ändern sich gemäß der Erfindung die Pitchlängen bis zur Mittellinie M-M stetig, sodaß entlang der Mittellinie M-M Bezugspitchlängen L₁', L₂' und L₃' vorliegen, wobei in diesem Ausführungsbeispiel L₃' <L₃, L₂' >L₂ und L₁>L₁ ist. An dieser Stelle sei erwähnt, daß es jedoch auch möglich ist, bei einzelnen oder einigen Pitches die Bezugspitchlänge gleich groß zu wählen wie die Basispitchlänge am Laufflä-chenrand.

Beim kürzesten vorhandenen Pitch, in diesem Fall das Pitch mit der Länge L₁, sollte die zugehörige Bezugspitchlänge L₁' um höchstens 30% kürzer sein als L₁ bzw. um höchstens 50% länger sein als L₁. Beim Pitch mit der größten Länge, in diesem Fall L₃' kann L₃' um 50% kleiner sein als L₃ und um ca. 30% größer sein als L₃. Größere Abweichungen könnten sich nachteilig auf die Stabilität des Laufflächenprofiles auswirken. Für ein Laufflächenprofil, wie es etwa Fig. 1 entspricht, wird bevorsugt eine Ausführung gewählt, bei der die kürzeste Bezugspitchlänge (entlang der Bezugslinie gemessen) bis zu 20% von der gewählten kürzesten Basispitchlänge (am Laufflächenrand gemessen) und die längste Bezugspitchlänge von der längsten gewählten Basispitchlänge um bis zu 30% abweicht.

Es wird darauf hingewiesen, daß gleichzeitig mit der erfindungsgemäßen Pitchlängenänderung die Quernutbreite variiert werden kann, wobei die Breite der Quernuten zur Laufflächenmitte zu entweder größer oder geringer werden kann als am Laufflächenrand. Eine derartige Variation ist übrigens auch bei einer Übereinstimmung von Basispitchlänge und Bezugspitchlänge möglich.

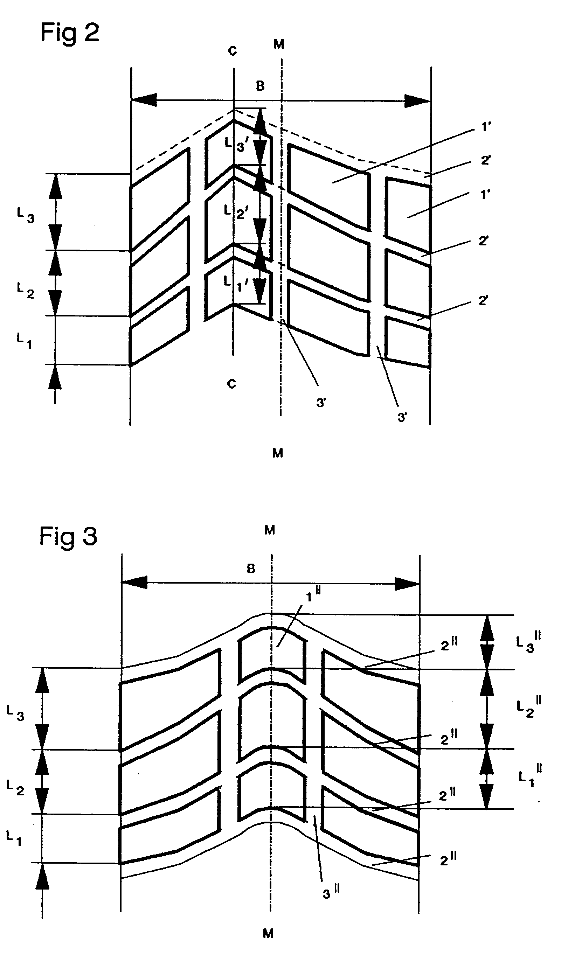

Fig. 2 zeigt eine Ausführungsvariante eines Laufflächenprofiles, welches asymmetrisch gestaltet ist. Das durch Umfangsnuten 3' und Quernuten 2' in Profilelemente 1' gegliederte Profil weist eine gegenüber der Mittellinie M-M seitlich versetzte Bezugslinie C-C auf, der die Spitzen der ebenfalls gepfeilt gestalteten Quernuten 2' zugeordnet sind. Die Bezugslinie C-C ist dabei jener Reifenseite zuzuordnen, die schließlich der Radaußenseite zugewandt ist. Die Bezugslinie C-C ist gegenüber der Mittellinie M-M um höchstens 20% der Laufflächenbereite B versetzt. In äquivalenter Weise wie beim Ausführungsbeispiel gemäß Fig. 1 erfolgt auch bei diesem Ausführungsbeispiel eine stetige Änderung der gewählten Pitchlängen L₁, L₂ und L₃ wobei die zugehörigen Bezugspitchlängen L₁', L₂' und L₃' an der Bezugslinie C-C vorliegen.

Das Ausführungsbeispiel gemäß Fig. 3 zeigt ein Laufflächenprofil, dessen grundsätzlicher Aufbau mit Quernuten 2'', Umfangsnuten 3'' und Profilelementen 1'' jenem der Fig. 1 entspricht. Lediglich der Quernutverlauf im Bereich der Reifenmitte (Umfangslinie M-M) ist anders gestaltet, es liegt hier ein bogenartiger, kontinuierlicher Übergang vor. Auch bei diesem Ausführungsbeispiel sind die am Laufflächenrand zu messenden Basispitchlängen L₁, L₂ und L₃ und ihre zugehörigen, entsprechend dem Ausführungsbeispiel gemäß Fig. 1 abgeänderten Bezugspitchlängen L₁', L₂', L₃' entlang der Mittellinie M-M erkennbar.

In den Zeichnungsfiguren sind jeweils Varianten dargestellt, bei denen die Pfeilspitzen der Quernuten Profilelementen zugeordnet sind. Davon abeichend kann die Bezugslinie für die Bezugspitchlängen beispielsweise entlang der Mittellinie einer Umfangsnut oder entlang einer Umfangsnutkante verlaufen.

Im Rahmen der Erfindung ist es auch möglich, eine Pitchabfolge mit fünf unterschiedlichen Basispitchlängen vorzusehen. Die Erfindung erfaßt jedoch auch solche Varianten, bei denen eine vollkommen freie Abfolge gewählt wird, d.h., daß sämtliche Pitches, deren Gesamtanzahl über den Reifenumfang normalerweise zwischen 45 und 70 gewählt wird, unterschiedliche Umfangslängen aufweisen. Die vorliegende Erfindung kann auch dahingehend abgewandelt werden, daß in der linken und der rechten Laufflächenhälfte bzw. am linken und am rechten Laufflächenrand unterschiedliche Basispitchlängen gewählt werden und entlang der Bezugslinie im Mittelbereich der Lauffläche, die also der Umfangsmittellinie M-M oder einer zu dieser parallelen Umfangslinie entsprechen kann, entweder für beide Laufflächenhälften die gleichen Bezugspitchlängen vorliegen oder aber für jede Laufflächenhälfte auch unterschiedliche Bezugspitchlängen gewählt werden.

Es ist weiters möglich, abweichend von der dargestellten reinen Blockstruktur an einer oder mehreren Stellen in Umfangsrichtung verlaufende Laufflächenbänder vorzusehen, so daß ein kombiniertes Band/Blockmuster gebildet wird.

Die Erfindung umfaßt aber auch Laufflächenprofile, die keine Umfangsnuten aufweisen, wo also nur eine Art von Hauptnuten, nähmlich gepfeilte oder bogenförmig verlaufende Quernuten vorgesehen sind. Auch kann beispielsweise zumindest eine Umfangsnut nur im Mittelberich des Profiles vorgesehen sein.

## Patentansprüche

1. Fahrzeugluftreifen in Radialbauart mit einem drehrichtungsgebundenen Laufflächenprofil, welches durch Quernuten (2, 2', 2'') und durch, insbesondere gerade verlaufende, Umfangsnuten (3, 3', 3'') voneinander getrennte Profilelemente (1, 1', 1'') aufweist, wobei durch die Quernuten (2, 2', 2'') und die Profilelemente (1, 1', 1'') in Umfangsrichtung gleichartige Profilabschnitte gebildet sind, die in zumindest drei unterschiedlichen, einem Laufflächenrand zuzuordnenden Basispitchlängen (L₁, L₂, L₃, L₁'', L₂'', L3'') vorgesehen sind, wobei an einer in Umfangsrichtung verlaufenden Bezugslinie (M-M, C-C) des Laufflächenprofiles Bezugspitchlängen (L₁', L₂', L₃') vorgesehen sind, die größer oder kleiner sind als ihre jeweils zugehörigen Basispitchlängen (L₁, L₂, L₃, L₁'', L₂'', L₃'') wobei die Pitchlängenänderung stetig erfolgt, dadurch gekennzeichnet, daß die der kürzesten Basispitchlänge zugeordnete Bezugspitchlänge um höchstens 30% kürzer und um höchstens 50% länger ist als die kürzeste Basispitchlänge und daß die der längsten Basispitchlänge zugeordnete Bezugspitchlänge um höchstens 50% kleiner und um höchstens 30% länger ist als die längste Basispitchlänge.

2. Reifen nach Anspruch 1, dadurch gekennzeichnet, daß die Bezugslinie die Äquatorlinie (M-M) des Reifens ist.

3. Reifen nach Anspruch 1, dadurch gekennzeichnet, daß die Bezugslinie (C-C) von der Äquatorlinie (M-M) um maximal 20% der Laufflächenbreite (B), die der Breite in der Bodenaufstandsfläche entspricht, beabstandet ist.

4. Reifen nach einem der Ansprüche 1 bis 3 mit einem Laufflächenprofil mit Quernuten, die, über die Laufflächenbreite betrachtet, einen gepfeilten Gesamtverlauf aufweisen, dadurch gekennzeichnet, daß der Bezugslinie (C-C, M-M) die Pfeilspitzen zugeordnet sind.

5. Reifen nach einem der Ansprüche 1 bis 3, mit einem Laufflächenprofil mit Quernuten, die, über die Laufflächenbreite betrachtet, einen bogenförmigen Gesamtverlauf aufweisen, dadurch gekennzeichnet, daß der Bezugslinie (M-M) Wendepunkte der Quernuten (2'') zugeordnet sind.

6. Reifen nach einem der Ansprüche 1 bis 5, dadurch gekennzeichnet, daß eine vorbestimmte Anzahl, insbesondere drei oder fünf, unterschiedlicher Basispitchlängen vorgesehen ist, welchen jeweils eine bestimmte Bezugspitchlänge fix zugeordnet ist.

7. Reifen nach einem der Ansprüche 1 bis 6, dadurch gekennzeichnet, daß die Zuordnung Basispitchlängen zu Bezugspitchlängen regellos, insbesondere statistisch erfolgt.

8. Reifen nach einem der Ansprüche 1 bis 7, dadurch gekennzeichnet, daß die Basispitchlängen an einem Laufflächenrand mit den Basispitchlängen am zweiten Laufflächenrand nicht oder nur teilweise übereinstimmen.

9. Reifen nach einem der Ansprüche 1 bis 8, dadurch gekennzeichnet, daß entlang der Bezugslinie eine Blockreihe verläuft.

10. Reifen nach einem der Ansprüche 1 bis 8, dadurch gekennzeichnet, daß die Bezugslinie mit der Mittellinie einer Umfangsnut oder mit einer Umfangsnutkante zumindest im wesentlichen zusammenfällt.

## Claims

1. Pneumatic vehicle tyre of a radial type of construction, having a tread surface profile which is adapted to the direction of rotation and has profile elements (1, 1', 1''), which are separated from one another by transverse grooves (2, 2', 2'') and by circumferential grooves (3, 3', 3''), which extend more especially in a straight line, similar profile portions being formed by the transverse grooves (2, 2', 2'') and the profile elements (1, 1', 1'') when viewed with respect to the circumferential direction and being provided in at least three different base pitch lengths (L₁, L₂, L₃, L₁'', L₂'', L₃''), which are to be associated with one tread surface edge, reference pitch lengths (L₁', L₂', L₃') being provided on a reference line (M-M, C-C) of the tread surface profile, which reference line extends in the circumferential direction, and being greater or smaller than their respectively associated base pitch lengths (L₁, L₂, L₃, L₁'', L₂'', L₃''), the pitch lengths constantly changing, characterised in that the reference pitch length associated with the shortest base pitch length is at most 30% shorter and at most 50% longer than the shortest base pitch length, and in that the reference pitch length associated with the longest base pitch length is at most 50% smaller and at most 30% longer than the longest base pitch length.

2. Tyre according to claim 1, characterised in that the reference line is the centre line (M-M) of the tyre.

3. Tyre according to claim 1, characterised in that the maximum spacing between the reference line (C-C) and the centre line (M-M) is 20% of the tread surface width (B), which corresponds to the width in the ground support area.

4. Tyre according to one of claims 1 to 3, having a tread surface profile with transverse grooves which, when viewed over the tread surface width, have an arrow-shaped general configuration, characterised in that the arrow tips are associated with the reference line (C-C, M-M).

5. Tyre according to one of claims 1 to 3, having a tread surface profile with transverse grooves which, when viewed over the tread surface width, have an arcuate general configuration, characterised in that turning points of the transverse grooves (2'') are associated with the reference line (M-M).

6. Tyre according to one of claims 1 to 5, characterised in that a predetermined number, more especially three or five, of different base pitch lengths is provided, which each have a predetermined reference pitch length fixedly associated therewith.

7. Tyre according to one of claims 1 to 6, characterised in that the base pitch lengths are associated with reference pitch lengths in an irregular manner, more especially in a statistical manner.

8. Tyre according to one of claims 1 to 7, characterised in that the base pitch lengths at one tread surface edge are not identical, or are only partially identical, to the base pitch lengths at the second tread surface edge.

9. Tyre according to one of claims 1 to 8, characterised in that a row of blocks extends along the reference line.

10. Tyre according to one of claims 1 to 8, characterised in that the reference line at least substantially coincides with the centre line of a circumferential groove or with a circumferential groove edge.

## Revendications

1. Pneumatique pour véhicules de conception radiale avec un profil de chape associé au sens de rotation, qui comporte des éléments de profil (1, 1', 1'') séparés entre eux, notamment par des gorges périphériques (3, 3', 3'') s'étendant de façon rectiligne, des sections de profil similaires étant formées par les gorges transversales (2, 2', 2'') et les éléments de profil (1, 1', 1'') dans le sens périphérique, sections de profil qui sont prévues dans au moins trois longueurs primitives de base (L₁, L₂, L₃, L₁'', L₂'', L₃'') associées à un bord de chape, sur une ligne de référence (M-M, C-C) s'étendant dans la direction périphérique du profil de chape, des longueurs primitives de référence (L₁', L₂', L₃') étant prévues, longueurs primitives de référence qui sont plus grandes ou plus petites que leurs longueurs primitives de base respectives correspondantes (L₁, L₂, L₃, L₁'', L₂'', L₃''), de sorte qu'une modification de longueur primitive se produit de façon constante, pneumatique pour véhicules caractérisé en ce que la longueur primitive de référence affectée à la longueur primitive de base la plus courte est au maximum de 30 % plus courte et au maximum de 50 % plus longue que la longueur primitive de base la plus courte et en ce que la longueur primitive de référence affectée à la longueur primitive de base la plus longue est au maximum de 50 % plus petite et au maximum de 30 % plus longue que la longueur primitive de base la plus longue.

2. Pneumatique selon la revendication 1, caractérisé en ce que la ligne de référence est la ligne d'équateur (M-M) du pneumatique.

3. Pneumatique selon la revendication 1, caractérisé en ce que la ligne de référence (C-C) est située à une distance par rapport à la ligne d'équateur (M-M) d'un maximum de 20 % de la largeur de la chape (B), qui correspond à la largeur de la surface de contact au sol.

4. Pneumatique selon l'une des revendications 1 à 3, avec un profil de chape comportant des gorges transversales, qui, si l'on considère la largeur de chape, présentent un tracé global à flèches ou à chevrons, caractérisé en ce que la ligne de référence (C-C, M-M) est affectée aux pointes des flèches ou chevrons.

5. Pneumatique selon l'une des revendications 1 à 3, avec un profil de chape comportant des gorges transversales, qui, considérées sur la largeur de la chape, présentent un tracé global en forme d'arc, caractérisé en ce que des points d' inflexion des gorges transversales (2'') sont affectés à la ligne de référence (M-M).

6. Pneumatique selon l'une des revendications 1 à 5, caractérisé en ce qu'il est prévu un nombre prédéterminé, en particulier 3 ou 5 longueurs primitives de base différentes, auxquelles est respectivement affectée de façon fixe une longueur primitive de référence déterminée.

7. Pneumatique selon l'une des revendications 1 à 6, caractérisé en ce que l'affectation des longueurs primitives de base aux longueurs primitives de référence s'effectue de façon aléatoire, en particulier statistiquement.

8. Pneumatique selon l'une des revendications 1 à 7, caractérisé en ce que les longueurs primitives de base sur un bord de chape ne coïncident pas ou ne coïncident que de façon partielle avec les longueurs primitives de base au niveau du deuxième bord de chape.

9. Pneumatique selon l'une des revendications 1 à 8, caractérisé en ce qu'une série de blocs s'étend le long de la ligne de référence.

10. Pneumatique selon l'une des revendications 1 à 8, caractérisé en ce que la ligne de référence coïncide avec la ligne médiane d'une gorge périphérique ou avec un bord de gorge périphérique au moins dans l'essentiel.
